# EUROPEAN PATENT APPLICATION

(11) **EP 1 005 794 A1**
(43) Date of publication of application: **07.06.2000**
(21) Application number: 99650005.4
(22) Date of filing: 01.02.1999
(51) Int. Cl.: A21C 11/00, A21C 9/04, A21C 9/08

(54) **Food products**

(30) Priority: 04.12.1998 IE 981013
(71) Applicant: Billcrest Products Limited, Dublin 4 (IE)
(72) Inventor: Darmon, Jacintha, Whitegate, County Galway (IE)
(74) Representative: O'Brien, John Augustine

(57) **Abstract**

Pizzas are prepared by mixing a pizza dough, dividing the dough into single portions, forming the single portions into balls of dough, and placing the individual balls of dough onto individual pizza trays. The dough pieces are pressed to form a desired pizza base and, after proving, the dough is cooked to form a pizza base. The pizza bases are removed from their trays, a sauce is applied, followed by cheese and toppings. The pizzas thus formed are then frozen and packaged. A consolidating apparatus 50 is used to consolidate cheese pieces after deposition of the pizza base. A similar consolidating apparatus 50 is also used to consolidate toppings after depositing on the cheese pieces. Each consolidating apparatus 50 provides a steam atmosphere through which pizzas with cheese and/or toppings applied are lied. A number of lines, 1, 2, 3 of de-panned pizza bases are led along a conveyor 4. A series of detectors are used to detect the absence of a pizza base or gap 6 in a line. A base depositing means 10 is used to fill the gap 6 with a pizza base in response to the detection of the absence of a pizza base in the gap.

## Description

### Introduction

The invention relates to a method and apparatus for preparing pizza.

There is a need for improved methods and apparatus for preparing pizzas with improved manufacturing efficiency and reduced reject rates. This invention is directed towards providing such methods and apparatus.

### Statements of Invention

According to the invention there is provided a method for preparing pizzas comprising the steps of:-
mixing a pizza dough;
dividing the dough into single portions;
forming the single portions into balls of dough;
placing the balls of dough onto individual pizza base trays;
pressing the dough pieces onto the trays;
proving the dough pieces;
cooking the dough pieces to form a pizza base;
removing the pizza bases from the trays;
applying a sauce to the pizza base;
applying cheese pieces and/or toppings to the sauce; and
leading the pizza base with the cheese pieces and/or toppings applied through a steam atmosphere to consolidate the cheese pieces and/or toppings in place on the pizza base.

In one embodiment of the invention after application of cheese pieces, the pizza base is led through a steam atmosphere to consolidate the cheese pieces on the pizza base.

In another embodiment of the invention after application of the toppings to the pizza base, the pizza base is led through a steam atmosphere to consolidate the toppings in place on the pizza base.

In a particularly preferred embodiment of the invention the method includes the steps of:-
applying cheese pieces to a pizza base;
leading the pizza base with the cheese pieces applied through a first steam atmosphere to consolidate the cheese pieces on the base;
applying toppings to the consolidated cheese pieces on the pizza base and leading the pizza base with the toppings applied over the consolidated cheese pieces through a second steam atmosphere to consolidate the toppings and cheese pieces in position on the pizza base.

Preferably the method includes the step of:-
leading a plurality of pizza bases, in line and at a desired spacing to a sauce application station; detecting the absence of a pizza base from the infeed line; and depositing a pizza base in a desired position in the line in response to the detection of the absence of a pizza base from the infeed line.

Typically the method includes the steps of:-
feeding a plurality of pizza bases to a base release means;
releasing a single base; and
delivering the single base to a base outlet means to present the pizza base to the gap in the line of pizza bases.

Preferably the pizza base outlet means has a closure which is opened in response to the gap in the pizza line to deliver a pizza base to the gap.

In preferred arrangement the pizza bases are stored in a pizza base magazine and a pizza is released from the magazine by engaging a second retaining means against the following pizza base in the magazine and releasing a first retaining means from a leading pizza base in the magazine.

In one embodiment of the invention there are a number of separate lines of pizza bases delivered to the sauce application station, and the method includes the steps of detecting the absence of a pizza base on any line and depositing a pizza base in each gap.

Preferably in this case there is base depositor corresponding to each line of pizza bases being delivered to the sauce application station.

In a further aspect the invention provides pizza preparation apparatus including
a sauce applicator for applying sauce to a pizza base;
a depositor for depositing cheese and/or topping on the sauce; and
consolidating means comprising a housing having an inlet through which pizza bases are led and an outlet for delivery of pizza bases from the consolidating means, the housing having a steam inlet and a steam outlet to generate a steam atmosphere through which the pizza bases are led to consolidate the cheese and/or toppings on the pizza base.

Preferably the housing includes an infeed section extending over part of an infeed line to the housing. Ideally the housing includes an outfeed section extending over part of an outfeed line from the housing. Preferably the outfeed section includes a steam outlet.

In one embodiment the depositor is a cheese depositor and the housing provides a cheese consolidating means.

In another embodiment the depositor is a toppings depositor and the housing provides a toppings consolidating means.

In a preferred embodiment of the invention the apparatus includes:-
a cheese depositor for depositing cheese on the sauce;
cheese consolidating means comprising a housing to provide a steam atmosphere through which the pizza bases with cheese applied are led to consolidate the cheese on the base;
a toppings depositor for depositing toppings on the cheese; and
toppings consolidating means comprising a housing to provide a steam atmosphere through which the pizza bases with toppings applied are led to consolidate the toppings on the base.

In a further aspect the invention provides a method for preparing comprising the steps of:
mixing a pizza dough;
dividing the dough into single portions;
forming the single portions into balls of dough;
placing the balls of dough onto individual pizza base trays;
pressing the dough pieces onto the trays;
proving the dough pieces;
cooking the dough pieces to form a pizza base;
removing the pizza bases from the trays;
leading a plurality of pizza bases, in line, and at a desired spacing to a sauce application station;
detecting the absence of a pizza base from the infeed line, and
depositing a pizza base in a desired position in the line in response to the detection of the absence of a pizza base from the infeed line.

Preferably the method includes the steps of:
feeding a plurality of pizza bases to a base release means;
releasing a single base; and
delivering the single base to a base outlet means to present the pizza base to the gap in the line pizza base.

Ideally, the pizza base outlet means has a closure which is opened in response to the gap in the pizza line to deliver a pizza base to the gap.

Preferably the pizza bases are stored in a pizza base magazine and a pizza is released from the magazine by engaging a second retaining means against he following pizza base in the magazine and releasing a first retaining means from a leading pizza base in the magazine.

In a preferred arrangement there are a number of separate lines of pizzas bases delivered to the sauce application station, and the method includes the steps of detecting the absence of a pizza base on any line and depositing a pizza base in each gap.

Ideally there is a base depositor corresponding to each line of pizza bases being delivered to the sauce application station.

In another aspect the invention provides pizza preparation apparatus comprising:-
detection means for detecting the absence of a pizza base on an infeed line to a sauce applicator; and
base depositing means for depositing a pizza base in a desired position in the line of response to the detection of the absence of a pizza base from the infeed line.

Preferably the base depositing means comprises:-
a magazine for a plurality of pizza bases;
release means for releasing a single base from the magazine;
delivery means for delivering the pizza base to a desired position, the delivery means having base outlet means to present the pizza base to the gap in the line of pizza bases.

In one embodiment of the invention the release means comprises a leading base retaining means and a trailing base relating means, the leading base retaining means being released and the trailing base retaining means being engaged to release a single pizza base from the magazine to the delivery means.

In a preferred arrangement the base outlet means is closed by a closure means which is opened in response to the gap in the pizza base line to deliver the pizza base released from the magazine to the gap.

Preferably the infeed line to the sauce applicator has a number of separate lanes, each for delivery of a line of pizza bases and a separate base depositing means is provided for each lane.

### Brief Description of the Drawings

The invention will be more clearly understood from the following description thereof given by way of example, only, in which:-
Fig. 1 is a side elevation, partially cross sectional view of a pizza base depositing apparatus according to one aspect of the invention;
Fig. 2 is a plan view of the apparatus of Fig. 1;
Fig. 3 is a perspective view of a base magazine and part of the delivery means of the apparatus;
Fig. 4 is a perspective view of another part of the delivery means;
Fig. 5 is a diagrammatic plan view of a number of the base depositing apparatus, in use;
Fig. 6 is a perspective view of a cheese and/or toppings consolidating apparatus of the invention; and
Fig. 7 is side, partially cross sectional view of the apparatus of Fig. 6.

### Detailed Description

Pizzas are prepared in the method of the invention by first mixing a pizza dough, dividing the dough into single portions, forming the single portions into balls of dough, and placing the individual balls of dough onto individual pizza trays. The dough pieces are pressed to form a desired pizza base and, after proving, the dough is cooked to form a pizza base. The pizza bases are removed from their trays, a sauce is applied, followed by cheese and toppings. The pizzas thus formed are then frozen and packaged.

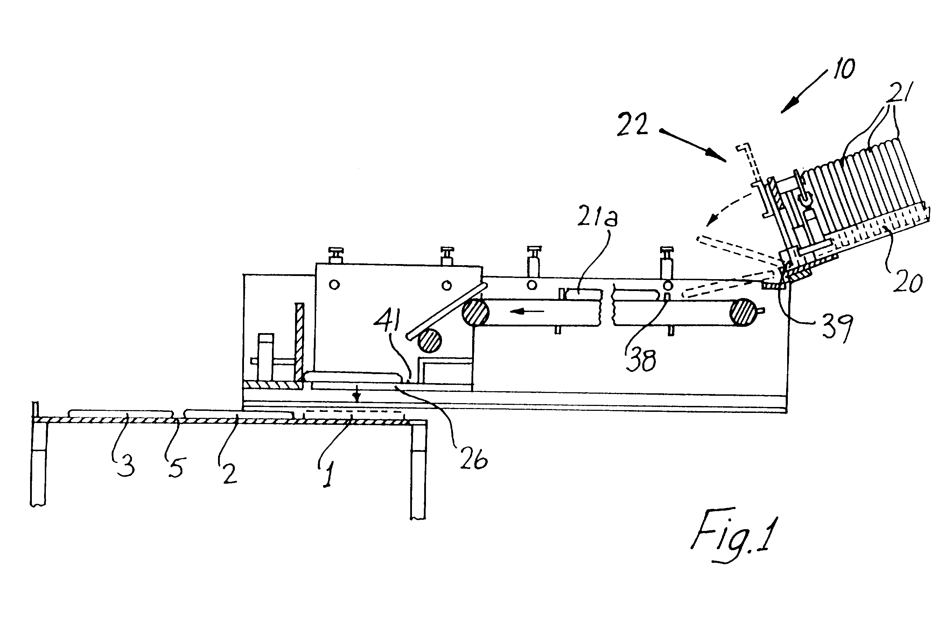

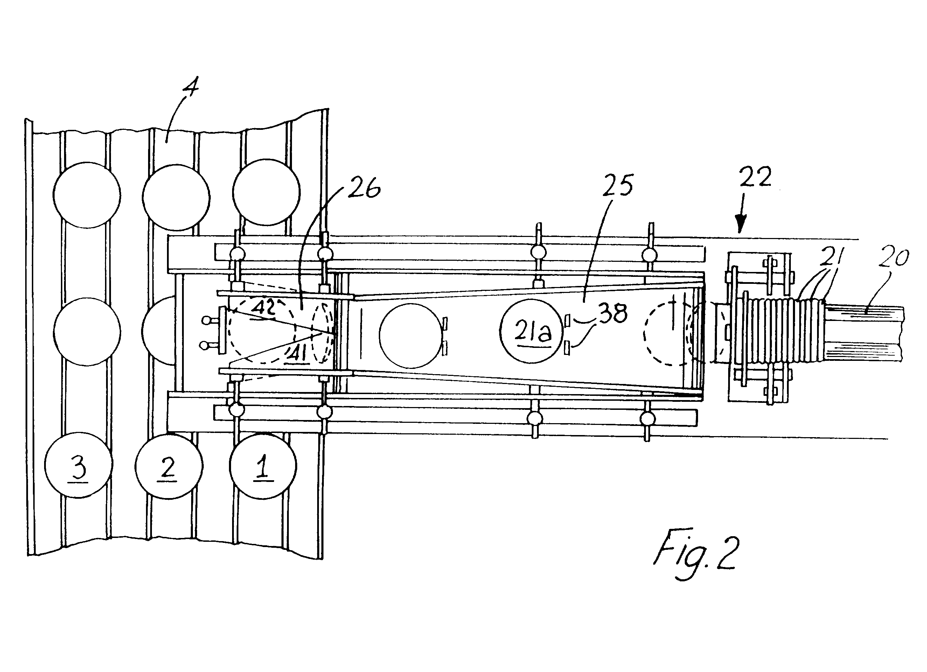

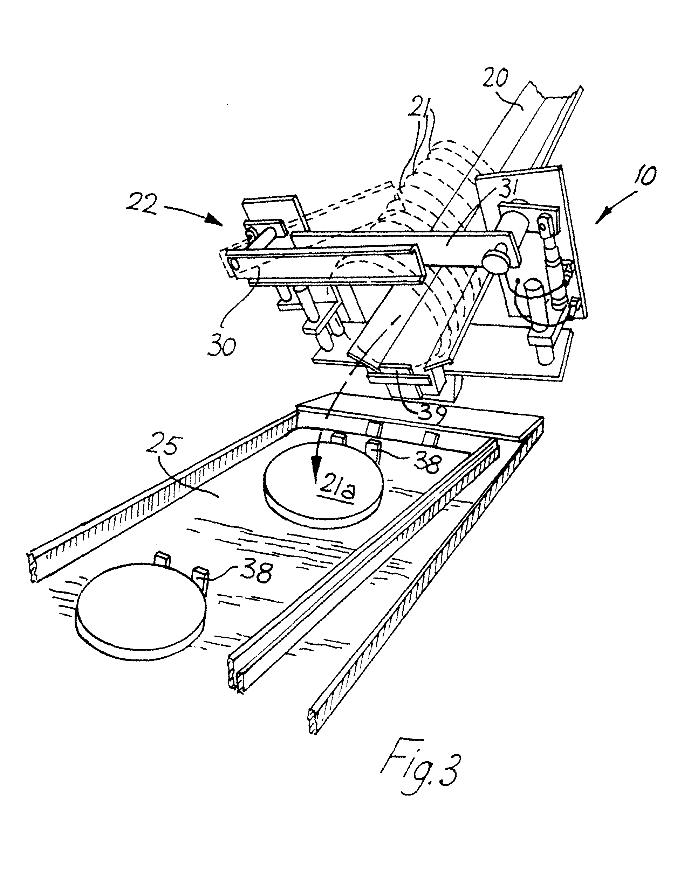

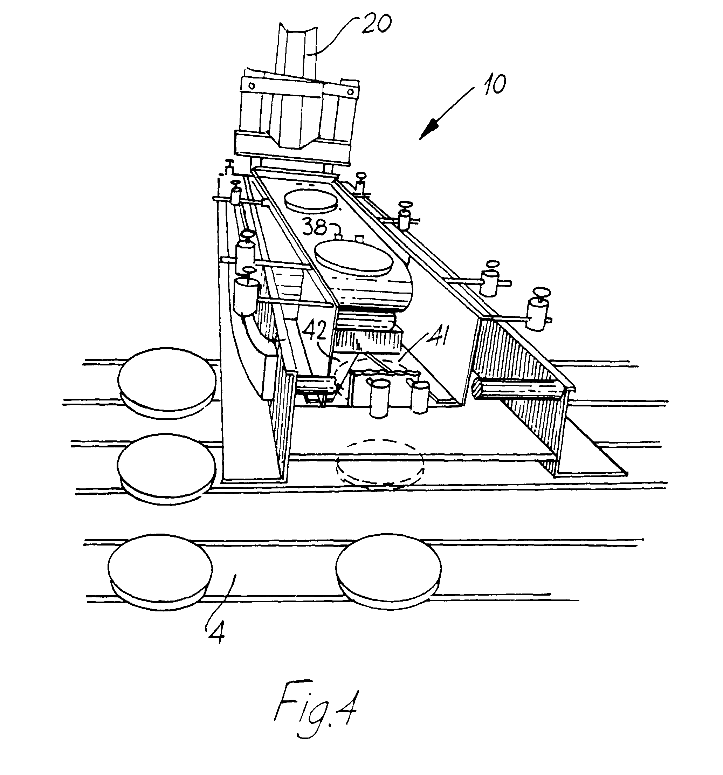

In a first aspect, and referring to Figs 1 to 5 a number of lines, in this case three lines 1, 2, 3 of de-panned pizza bases are led along a conveyor 4. A series of detectors (not shown) are used to detect the absence of a pizza base or gap 6 in a line, in this case line 1 (Figs 1 to 4). A base depositing means 10 is used to fill the gap 6 with a pizza base in response to the detection of the absence of a pizza base in the gap.

The base depositing means 10 comprises a magazine 20 for a plurality of pizza bases 21 and release means 22 for releasing a single pizza base 21 from the magazine onto a delivery means formed by a conveyor 25. The conveyor 25 has a number of sections and includes an outlet means 26 to present the pizza base to the gap 6 in the line 1 of pizza bases.

The release means 22 comprises a leading base retaining arm 30 and a trailing base retaining arm 31. The leading base retaining arm 30 is released and the trailing base retaining arm 31 is engaged to release the leading pizza base 21a from the magazine while retaining the following pizza bases 21 in the magazine. To release the next pizza base from the magazine the procedure is reversed so that the first retaining arm 30 holds a trailing pizza in the magazine while the second retaining arm 31 is released to allow the delivery of the lending pizza 21 from the magazine onto the delivery conveyor 25.

The magazine includes a tip over projection 39 over which the leading pizza falls, on release, onto the delivery conveyor 25. The pizza is guided along the delivery conveyor 25 by engagement fingers 38 and the conveyor 25 delivers the pizza base 21 an outlet means positioned over the line 1 of pizza bases on the main conveyor.

The outlet means is closed by a pair of sliding plates 41, 42 which are slidably movable from a closed position holding the pizza base 21 over the line 1 to a release position in which the plates 41, 42 are opened to allow the pizza base 21 to drop onto the gap 6 in the line 1 of pizza bases on the main conveyor.

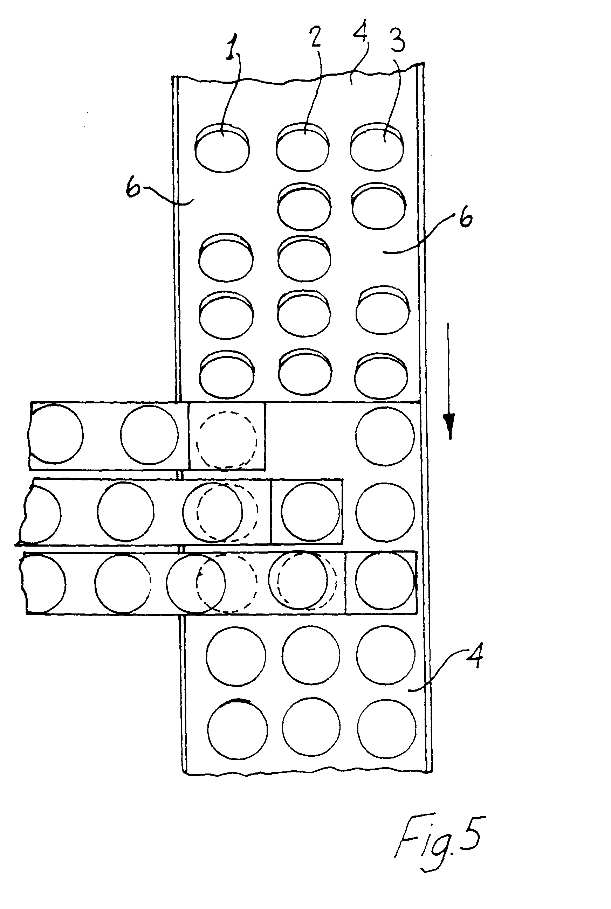

In this way, production rates are optimised because there are substantially no gaps in the line 1 of pizza bases being presented for sauce application and subsequent steps. As will be apparent from Fig. 5 a number of base depositors may be provided to supply pizza bases for filling any gaps in each of the lines 1, 2, 3 of pizzas on the main conveyor. Indeed, it will be appreciated that the base depositors may be used to provide a supply of pizza bases onto the main line to manufacturing if the supply of pizza bases from the main line is interrupted. In this way the manufacturing efficiency is optimised.

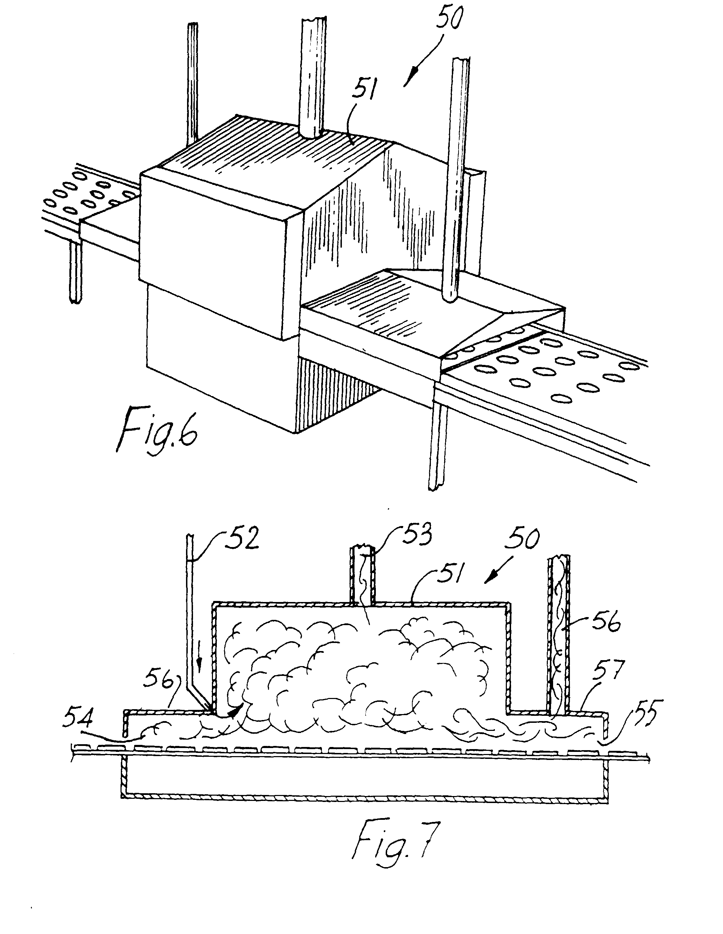

Referring to Figs 6 and 7 there is illustrated a consolidating apparatus 50 also according to the invention. The consolidating apparatus is used in this case to consolidate cheese pieces after deposition on the pizza base. A similar consolidating apparatus is also used to consolidate toppings after depositing on the cheese pieces. It will be appreciated that in some cases the consolidating apparatus may be used to consolidate cheese pieces only, topping only, or a combination of both, either in separate or the same consolidating apparatus. The configuration will depend on the particular cheese/toppings formulation being used.

Each consolidating apparatus 50 provides a steam atmosphere through which pizzas with cheese and/or toppings applied are led. The apparatus 50 comprises a housing 51 with a steam inlet 52 and a steam outlet 53 which are positioned to provide a steam atmosphere over the pizza to consolidate the material deposited onto the base. The housing 50 has an inlet 54 and an outlet 55 through which a pizza conveyor passes. In this case the housing has an infeed extension 56 and an outfeed extension 57 to optimise consolidation. For optimum operating conditions in providing a steam atmosphere in the housing 51 the inlet extension 54 does not have an independent steam outlet, however, the outlet extension 55 has a dedicated steam outlet 58.

We have found that the consolidation using a steam atmosphere has no adverse effect on the organoleptic or cooking properties of the pizzas. The physical characteristics are improved and reject rates are reduced.

Many variations in the specification embodiments of the invention hereinbefore described will be readily apparent and accordingly the invention is not limited to the embodiments hereinbefore described which may be varied in detail.

## Claims

1. A method for preparing pizzas comprising the steps of:-
mixing a pizza dough;
dividing the dough into single portions;
forming the single portions into balls of dough;
placing the balls of dough onto individual pizza base trays;
pressing the dough pieces onto the trays;
proving the dough pieces;
cooking the dough pieces to form a pizza base;
removing the pizza bases from the trays;
applying a sauce to the pizza base;
applying cheese pieces and/or toppings to the sauce; and
leading the pizza base with the cheese pieces and/or toppings applied through a steam atmosphere to consolidate the cheese pieces and/or toppings in place on the pizza base.

2. A method as claimed in claim 1 wherein, after application of cheese pieces, the pizza base is led through a steam atmosphere to consolidate the cheese pieces on the pizza base.

3. A method as claimed in claim 1 wherein, after application of the toppings to the pizza base, the pizza base is led through a steam atmosphere to consolidate the toppings in place on the pizza base.

4. A method as claimed in any preceding claim including the steps of:-
applying cheese pieces to a pizza base;
leading the pizza base with the cheese pieces applied through a first steam atmosphere to consolidate the cheese pieces on the base;
applying toppings to the consolidated cheese pieces on the pizza base and leading the pizza base with the toppings applied over the consolidated cheese pieces through a second steam atmosphere to consolidate the toppings and cheese pieces in position on the pizza base.

5. A method as claimed in any preceding claim including the steps of:-
leading a plurality of pizza bases, in line, and at a desired spacing to a sauce application station; detecting the absence of a pizza base from the infeed line; and depositing a pizza base (21) in a desired position in the line in response to the detection of the absence of a pizza base from the infeed line.

6. A method as claimed in claim 5 including the steps of:-
feeding a plurality of pizza bases (21) to a base release means (22);
releasing a single base (21); and
delivering the single base (21) to a base outlet means (26) to present the pizza base to the gap (6) in the line of pizza bases, preferably the pizza base outlet means (26) has a closure which is opened in response to the gap (6) in the pizza line to deliver a pizza base (21) to the gap (6).

7. A method as claimed in claim 6 wherein the pizza bases (21) are stored in a pizza base magazine (20) and a pizza (21) is released from the magazine (20) by engaging a second retaining means (31) against the following pizza base (21) in the magazine (20) and releasing a first retaining means (30) from a leading pizza base in the magazine (20).

8. A method as claimed in any of claims 5 to 7 wherein there are a number of separate lines of pizza bases delivered to the sauce application station, and the method includes the steps of detecting the absence of a pizza base on any line and depositing a pizza bas (21) in each gap (6), preferably there is base depositor (10) corresponding to each line of pizza bases being delivered to the sauce application station.

9. Pizza preparation apparatus including:-
a sauce applicator for applying sauce to a pizza base;
a depositor for depositing cheese and/or topping on the sauce; and
consolidating means (50) comprising a housing (51) having an inlet (54) through which pizza bases are led and an outlet (55) for delivery of pizza bases from the consolidating means (50), the housing (51) having a steam inlet (52) and a steam outlet (53) to generate a steam atmosphere through which the pizza bases are led to consolidate the cheese and/or toppings on the pizza base.

10. Apparatus as claimed in claim 9 wherein the housing (51) includes an infeed section (56) extending over part of an infeed line to the housing, preferably the housing (51) includes an outfeed section (57) extending over part of an outfeed line from the housing, preferably the outfeed section (57) includes a steam outlet (58).

11. Apparatus as claimed in claim 9 or 10 wherein the depositor is a cheese depositor and the housing (51) provides a cheese consolidating means, alternatively the depositor is a toppings depositor and the housing (51) provides a toppings consolidating means.

12. Apparatus as claimed in any of claims 9 to 11 including:-
a cheese depositor for depositing cheese on the sauce;
cheese consolidating means comprising a housing to provide a steam atmosphere through which the pizza bases with cheese applied are led to consolidate the cheese on the base;
a toppings depositor for depositing toppings on the cheese; and
toppings consolidating means (50) comprising a housing (51) to provide a steam atmosphere through which the pizza bases with toppings applied are led to consolidate the toppings on the base.

13. A method for preparing pizzas comprising the steps of:-
mixing a pizza dough;
dividing the dough into single portions;
forming the single portions into balls of dough;
placing the balls of dough onto individual pizza base trays;
pressing the dough pieces onto the trays;
proving the dough pieces;
cooking the dough pieces to form a pizza base;
removing the pizza bases from the trays;
leading a plurality of pizza bases, in line, and at a desired spacing to a sauce application station;
detecting the absence of a pizza base from the infeed line, and
depositing a pizza base in a desired position in the line in response to the detection of the absence of a pizza base from the infeed line.

14. A method as claimed in claim 13 including the steps of:-
feeding a plurality of pizza bases (21) to a base release means (22);
releasing a single base (21); and
delivering the single base (21) to a base outlet means (26) to present the pizza base to the gap (6) in the line pizza bases, preferably the pizza base outlet means (26) has a closure which is opened in response to the gap (6) in the pizza line to deliver a pizza base (21) to the gap (6), preferably the pizza bases (21) are stored in a pizza base magazine (20) and a pizza base (21) is released from the magazine (20) by engaging a second retaining means (31) against the following pizza base (21) in the magazine (20) and releasing a first retaining means (30) from a leading pizza base (21) in the magazine (20).

15. A method as claimed in claim 13 or 14 wherein there are a number of separate lines of pizzas bases delivered to the sauce application station, and the method includes the steps of detecting the absence of a pizza base on any line and depositing a pizza base (21) in each gap (6), preferably there is a base depositor (10) corresponding to each line of pizza bases being delivered to the sauce application station.

16. Pizza preparation apparatus comprising :-
detection means for detecting the absence of a pizza base on an infeed line to a sauce applicator; and
base depositing means (10) for depositing a pizza base (21) in a desired position in the line in response to the detection of the absence of a pizza base from the infeed line.

17. Apparatus as claimed in claim 16 wherein the base depositing means comprises:-
a magazine (20) for a plurality of pizza bases (21);
release means (22) for releasing a single base (21) from the magazine (20);
delivery means for delivering the pizza base to desired position, the delivery means having base outlet means (26) to present the pizza base (21) to the gap (6) in the line of pizza bases,
preferably the release means (22) comprises a leading base retaining means (31) and a trailing base retaining means (32), the leading base retaining means (31) being released and the trailing base retaining means (32) being engaged to release a single pizza base (21) from the magazine to the delivery means,
preferably the base outlet means (26) is closed by a closure means which is opened in response to the gap in the pizza base line to deliver the pizza base (21) released from the magazine (20) to the gap (6),
preferably the infeed line to the sauce applicator has a number of separate lanes, each for delivery of a line of pizza bases and a separate base depositing means (10) is provided for each lane.
